# EUROPEAN PATENT APPLICATION

(11) **EP 2 725 676 A1**
(43) Date of publication of application: **30.04.2014**
(21) Application number: 12802907.1
(22) Date of filing: 22.06.2012
(51) Int. Cl.: H02J 3/38, H02J 1/00

(54) **POWER CONDITIONER, CONTROL METHOD AND POWER GENERATION SYSTEM**

(30) Priority: 22.06.2011 JP 2011138793
(71) Applicant: Kyocera Corporation, Kyoto-shi, Kyoto 612-8501 (JP)
(72) Inventor: SATAKE, Masaomi, Kyoto-shi, Kyoto 612-8501 (JP)
(74) Representative: Schwabe - Sandmair - Marx
(86) International application number: PCT/JP2012/004082
(87) International publication number: WO 2012/176477

(57) **Abstract**

Provided is a power conditioner that can stably obtain direct current output even when disconnection occurs. The power conditioner includes a DC/DC converter (12) that receives input of direct current output by power generating equipment, a direct current output unit (18) for outputting the direct current output to an external unit, a grid interconnection switch (14) that connects to a grid (22), an inverter (13) that connects to the grid (22) via the grid interconnection switch (14) and performs DC/AC conversion by converting the direct current output from the DC/DC converter (12) to alternating current and outputting the alternating current to the grid (22), an AC switch (16) connected to the grid (22) side of the grid interconnection switch (14), a rectifier (17) that connects to the grid (22) via the AC switch (16), rectifies alternating current from the grid (22), and outputs rectified current to the DC/DC converter (12), and a control unit (19) that connects the AC switch (16) before disconnecting the grid interconnection switch (14) when the grid interconnection switch (14) is to be disconnected under a predetermined disconnection condition.

## Description

### CROSS-REFERENCE TO RELATED APPLICATION

This application claims priority to and the benefit of Japanese Patent Application No. 2011-138793 filed June 22, 2011, the entire contents of which are incorporated herein by reference.

### TECHNICAL FIELD

The present invention relates to a power conditioner, control method, and power generation system that connect power generating equipment and a commercial power grid (grid).

### BACKGROUND

Power generation systems provided with power generating equipment, such as solar panels or the like, are provided with a power conditioner for connecting the power generating equipment and the grid. A known example of such a power conditioner is provided with a direct current output unit for a storage cell, charges the storage cell with power from the power generating equipment and from the grid, and maintains power by discharge from the storage cell when grid trouble occurs, such as a power outage or a drop in grid voltage (for example, see Patent Literature 1).

According to the "Grid Interconnection Technical Requirements Guidelines for Guaranteeing Electric Power Quality" (Agency for Natural Resources and Energy, October 1, 2004), when grid voltage drops, the "time interval for taking countermeasures against a momentary voltage drop is approximately up to two seconds". Therefore, when a drop in grid voltage occurs, power generating equipment 61 needs to be disconnected within two seconds. After being disconnected, disconnected status is normally maintained for a certain period of time, and once it is confirmed that the grid is not experiencing trouble, the power generating equipment is automatically restored (connected).

### CITATION LIST

Patent Literature 1: JP20031189477A

### SUMMARY

Instead of connecting a storage cell, however, a direct current load may be connected to the direct current output unit, and the DC power obtained from the power generating equipment may be boosted with a DC/DC converter to drive the direct current load. Moreover, since DC power can be obtained from the grid with a bidirectional inverter, it is possible to obtain DC power at night even when the power generating equipment is, for example, a solar panel.

With such a structure, however, when disconnection occurs, the only power source for the direct current load is the power generating equipment, and the direct current load might not be supplied with sufficient power. In particular, when the power generating equipment is a solar panel, and disconnection occurs at night, no DC power can be obtained, making it impossible to drive the direct current load. Note that such a problem is not limited to the case of when the power generating equipment is a solar panel but also occurs when DC power from a variety of power generating equipment, such as a wind power generator, a private power generator, or the like, fluctuates.

The present invention has been conceived in light of the above circumstances, and it is an object thereof to provide a power conditioner, control method, and power generation system that can stably obtain DC power even when disconnection occurs.

A power conditioner according to a first aspect of the present invention includes a DC/DC converter configured to receive input of direct current output by power generating equipment; a direct current output unit configured to output, to an external unit, direct current output from the DC/DC converter; a grid interconnection switch configured to connect to a commercial power grid; an inverter configured to connect to the commercial power grid via the grid interconnection switch and to perform DC/AC conversion by converting the direct current output from the DC/DC converter to alternating current and outputting the alternating current to the commercial power grid; an AC switch connected to a commercial power grid side of the grid interconnection switch; a rectifier configured to connect to the commercial power grid via the AC switch, to rectify alternating current from the commercial power grid, and to output rectified current to the DC/DC converter; and a control unit configured to connect the AC switch before disconnecting the grid interconnection switch when the grid interconnection switch is to be disconnected under a predetermined disconnection condition.

A second aspect of the present invention is the power conditioner according to the first aspect, such that when connecting the AC switch, the control unit aligns a voltage of the direct current output by the power generating equipment with a rectified voltage from the rectifier when the power generating equipment is generating power.

A third aspect of the present invention is the power conditioner according to the second aspect, such that the DC/DC converter has a function for maximum power point tracking of the direct current output by the power generating equipment, and the control unit suspends operation of the function for maximum power point tracking and aligns the voltage of the direct current output by the power generating equipment with the rectified voltage from the rectifier.

A fourth aspect of the present invention is the power conditioner according to the third aspect, such that the power conditioner connects to equipment including a solar panel as the power generating equipment.

A fifth aspect of the present invention is the power conditioner according to the first aspect, such that the control unit disconnects the grid interconnection switch and connects the AC switch with the predetermined disconnection condition being one of grid voltage and grid frequency of the commercial power grid deviating from a predetermined range.

A sixth aspect of the present invention is the power conditioner according to the fifth aspect, such that the control unit disconnects the grid interconnection switch and connects the AC switch within a first time interval from detection of the predetermined disconnection condition.

A seventh aspect of the present invention is the power conditioner according to the fifth aspect, such that the first time interval is two seconds.

An eighth aspect of the present invention is the power conditioner according to the first aspect, such that upon disconnecting the grid interconnection switch and connecting the AC switch, the control unit executes grid interconnection restoration processing when a second time interval elapses after disconnecting the grid interconnection switch.

A ninth aspect of the present invention is the power conditioner according to the eighth aspect, such that the second time interval is 10 seconds.

A tenth aspect of the present invention is the power conditioner according to the eighth aspect, such that as the grid interconnection restoration processing, the control unit connects the grid interconnection switch and disconnects the AC switch when the predetermined disconnection condition is no longer met.

An eleventh aspect of the present invention is the power conditioner according to the tenth aspect, such that when connecting the grid interconnection switch, the control unit connects the grid interconnection switch before disconnecting the AC switch.

A twelfth aspect of the present invention is the power conditioner according to the eighth aspect, such that the DC/DC converter has a function for maximum power point tracking of the direct current output by the power generating equipment, and when executing the grid interconnection restoration processing, the control unit starts operation of the function for maximum power point tracking.

A thirteenth aspect of the present invention is the power conditioner according to the first aspect, such that the inverter is a bidirectional inverter also configured to perform AC/DC conversion by converting the alternating current from the commercial power grid to direct current and outputting the direct current to the direct current output unit, and the bidirectional inverter selectively performs the DC/AC conversion and the AC/DC conversion.

A fourteenth aspect of the present invention is a method for controlling a power conditioner, the power conditioner including: a DC/DC converter configured to receive input of direct current output by power generating equipment; a direct current output unit configured to output, to an external unit, direct current output from the DC/DC converter; a grid interconnection switch configured to connect to a commercial power grid; and an inverter configured to connect to the commercial power grid via the grid interconnection switch and to perform DC/AC conversion by converting the direct current output from the DC/DC converter to alternating current and outputting the alternating current to the commercial power grid; the method including: an AC switch connected to a commercial power grid side of the grid interconnection switch; a rectifier configured to connect to the commercial power grid via the AC switch, to rectify alternating current from the commercial power grid, and to output rectified current to the DC/DC converter; and a control unit configured to connect the AC switch before disconnecting the grid interconnection switch when the grid interconnection switch is to be disconnected under a predetermined disconnection condition.

A fifteenth aspect of the present invention is a power generation system including power generating equipment and a power conditioner, the power conditioner including: a DC/DC converter configured to receive input of direct current output by power generating equipment; a direct current output unit configured to output, to an external unit, direct current output from the DC/DC converter; a grid interconnection switch configured to connect to a commercial power grid; an inverter configured to connect to the commercial power grid via the grid interconnection switch and to perform DC/AC conversion by converting the direct current output from the DC/DC converter to alternating current and outputting the alternating current to the commercial power grid; an AC switch connected to a commercial power grid side of the grid interconnection switch; a rectifier configured to connect to the commercial power grid via the AC switch, to rectify alternating current from the commercial power grid, and to output rectified current to the DC/DC converter; and a control unit configured to connect the AC switch before disconnecting the grid interconnection switch when the grid interconnection switch is to be disconnected under a predetermined disconnection condition.

According to the present invention, it is possible stably to obtain direct current output even when disconnection occurs.

### BRIEF DESCRIPTION OF DRAWINGS

The present invention will be further described below with reference to the accompanying drawings, wherein:
FIG. 1 is a block diagram schematically illustrating the structure of a power conditioner according to an embodiment of the present invention;
FIG. 2 is a flowchart illustrating operations of the power conditioner in FIG. 1; and
FIG. 3 is a flowchart illustrating the restoration processing in FIG. 2.

### DESCRIPTION OF EMBODIMENTS

The following describes an embodiment of the present invention with reference to the drawings.

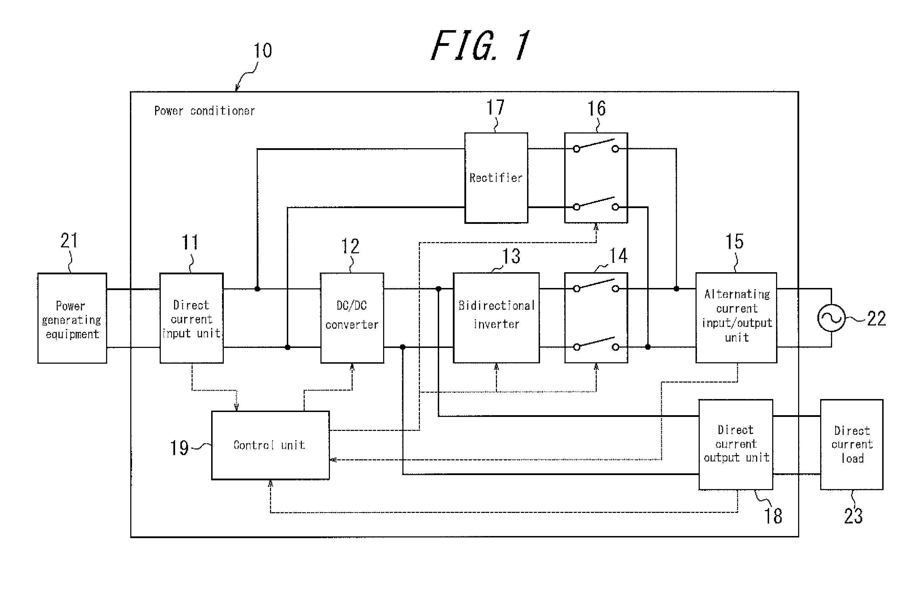

FIG. 1 is a block diagram schematically illustrating the structure of a power conditioner according to an embodiment of the present invention. A power conditioner 10 includes a direct current input unit 11, a DC/DC converter 12, a bidirectional inverter 13, a grid interconnection switch 14, an alternating current input/output unit 15, an AC switch 16, a rectifier 17, a direct current output unit 18, and a control unit 19.

The direct current input unit 11 includes a connecting terminal and a voltage/current detection circuit and receives input of direct current (DC) output by power generating equipment 21 such as a solar panel, wind power generator, fuel cell, private power generator, or the like. The direct current output of the direct current input unit 11 is input into the DC/DC converter 12. Detection output from the voltage/current detection circuit in the direct current input unit 11 is input into the control unit 19.

The DC/DC converter 12 has a function for Maximum Power Point Tracking (MPPT) via control by the control unit 19, controls the input direct current voltage, and inputs direct current into the bidirectional inverter 13 and the direct current output unit 18.

Via control by the control unit 19, the bidirectional inverter 13 performs DC/AC conversion selectively on the direct current input from the DC/DC converter 12 and provides reverse power flow to a commercial power grid (grid) 22 through the grid interconnection switch 14 and the alternating current input/output unit 15. Via control by the control unit 19, the bidirectional inverter 13 also performs AC/DC conversion selectively on alternating current (AC) input from the grid 22 through the alternating current input/output unit 15 and the grid interconnection switch 14 and inputs the converted direct current to the direct current output unit 18.

The grid interconnection switch 14 is configured with a relay switch controlled by the control unit 19 to be ON (connected) or OFF (disconnected) and selectively disconnects the power generating equipment 21 from the grid 22. In other words, in the case in FIG. 1, the bidirectional inverter 13 is selectively disconnected from the grid 22. The grid interconnection switch 14 is thus the disconnection point of the power generating equipment 21.

The alternating current input/output unit 15 includes a connecting terminal, a voltage/current detection circuit, and a frequency detection circuit and performs input and output of alternating current from the grid 22 and alternating current from the bidirectional inverter 13. Detection output from the voltage/current detection circuit and the frequency detection circuit in the alternating current input/output unit 15 is input into the control unit 19.

The AC switch 16 is configured with a relay switch controlled by the control unit 19 to be ON or OFF. When ON, the AC switch 16 inputs, into the rectifier 17, alternating current input that is input from the grid 22 through the alternating current input/output unit 15.

The rectifier 17 rectifies alternating current from the grid 22 to direct current. The rectified direct current output is input into the DC/DC converter 12.

The direct current output unit 18 includes a connecting terminal. A direct current load 23 that requires a direct current power supply is connected to the connecting terminal, such as a storage cell, LED lighting equipment, a personal computer, an inverter device, or the like. Direct current power from the DC/DC converter 12 or the bidirectional inverter 13 is fed to the direct current load 23. The direct current output unit 18 includes a voltage/current detection circuit, and the detection output thereof is input into the control unit 19.

The control unit 19 includes a memory storing a control program, a variety of settling ranges, settling values, and so forth; a timer function; and the like. Based on voltage/current detection output from the direct current input unit 11, voltage/current detection output and frequency detection output from the alternating current input/output unit 15, and voltage/current detection output from the direct current output unit 18, the control unit 19 controls the MPPT function of the DC/DC converter 12, opening and closing of the grid interconnection switch 14 and the AC switch 16, and the like.

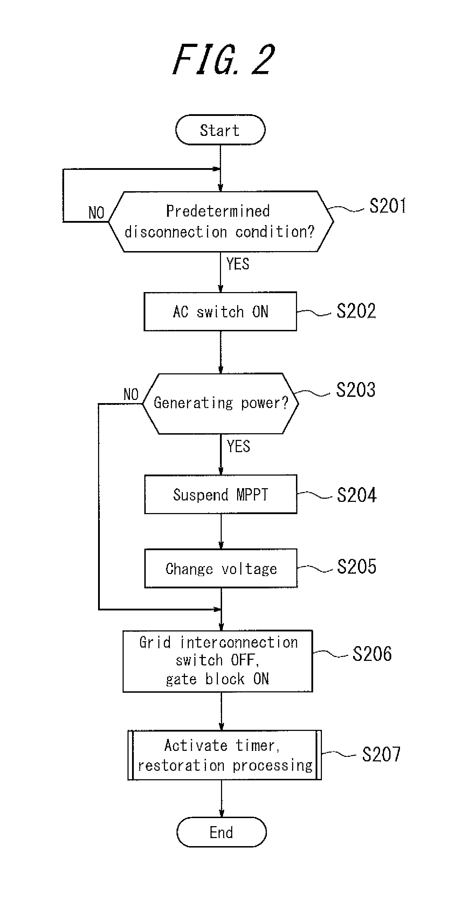

The following describes operations of the power conditioner 10 according to the present embodiment with reference to the flowchart in FIG. 2. Note that in the initial state, it is assumed that the grid interconnection switch 14 is ON, and the AC switch 16 is OFF.

First, the control unit 19 determines whether a predetermined disconnection condition is satisfied (step S201). As the predetermined disconnection condition, the control unit 19 determines whether the grid voltage or the grid frequency of the grid 22 has deviated from a settling range based on the voltage/current detection output and the frequency detection output from the alternating current input/output unit 15.

As a result, if both are in the settling range, power is supplied from the power generating equipment 21 or the grid 22 to the direct current load 23 in accordance with the relative magnitudes of the power generated by the power generating equipment 21 and the power consumed by the direct current load 23 (direct current load power). For example, if the generated power > the direct current load power, the generated power is provided to the direct current load 23 via the DC/DC converter 12. The generated power also reaches the grid 22 by reverse power flow via the DC/DC converter 12 and the bidirectional inverter 13. If the generated power < the direct current load power, along with the generated power, current from the grid 22 is converted to direct current by the bidirectional inverter 13 and fed to the direct current load 23. If the generated power = the direct current load power, the generated power is provided to the direct current load 23 via the DC/DC converter 12 without undergoing reverse power flow, nor with power being obtained from the grid 22.

Conversely, in step S201, when it is determined that the grid voltage or the grid frequency of the grid 22 has deviated from the settling range, the control unit 19 turns the AC switch 16 ON (step S202). In this way, alternating current from the grid 22 is rectified to direct current by the rectifier 17 and provided to the DC/DC converter 12. Furthermore, the control unit 19 determines whether the power generating equipment 21 is generating power based on the voltage/current detection output from the direct current input unit 11 (step S203).

As a result, when the power generating equipment 21 is generating power, the control unit 19 suspends operation of the MPPT function if the DC/DC converter 12 is executing an MPPT operation (step S204) and aligns the generated power voltage of the power generating equipment 21 in the DC/DC converter 12 with the rectified voltage from the rectifier 17 (step S205). Next, the control unit 19 turns the grid interconnection switch 14 OFF and turns the gate block of the bidirectional inverter 13 ON, i.e. shuts off the gate signal (step S206). In this way, the power generating equipment 21 and the bidirectional inverter 13 are disconnected from the grid 22. These components are disconnected within two seconds, as described above, from the determination in step S201 that the grid voltage or the grid frequency of the grid 22 has deviated from the settling range. Note that in step S203, when the power generating equipment 21 is not generating power, processing proceeds to step S206.

Subsequently, the control unit 19 activates a timer set to a settling value for a restoration time interval after disconnection (for example, 10 seconds) and executes grid interconnection restoration processing (step S207).

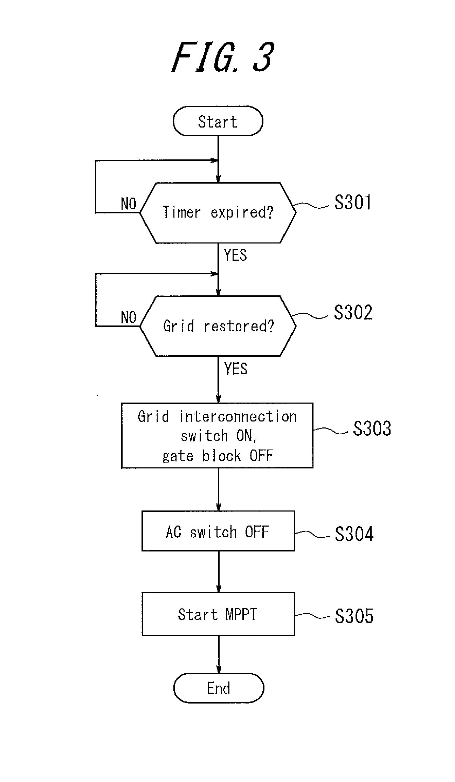

FIG. 3 is a flowchart illustrating the restoration processing in step S207 of FIG. 2. First, the control unit 19 determines whether the timer has reached the settling value (step S301). When the timer has reached the settling value, then based on the voltage/current detection output and the frequency detection output from the alternating current input/output unit 15, the control unit 19 determines whether the grid 22 has been restored, i.e. whether the grid voltage for the grid frequency has returned to the settling value (step S302).

As a result, when determining that the grid 22 has been restored, the control unit 19 turns the grid interconnection switch 14 ON and turns the gate block of the bidirectional inverter 13 OFF, i.e. provides the gate signal (step S303). In this way, the power generating equipment 21 and the bidirectional inverter 13 are connected to the grid 22.

Subsequently, the control unit 19 turns the AC switch 16 OFF (step S304), starts operation of the MPPT function of the DC/DC converter 12 (step S305), and terminates restoration processing.

In this way, with the power conditioner 10 according to the present embodiment, upon detection that the grid voltage or grid frequency has deviated from the settling range, the alternating current of the grid 22 is rectified to direct current by the rectifier 17 and provided to the DC/DC converter 12 before disconnection. Accordingly, when the bidirectional inverter 13 is subsequently disconnected, DC power can be continuously fed to the direct current load 23 without being affected by the generated power of the power generating equipment 21. Accordingly, the direct current load 23 can be driven stably.

Furthermore, the rectified output of the rectifier 17 is input into the DC/DC converter 12, and therefore the rectifier 17 does not necessarily need to output direct current at a stable voltage and may output pulsating current. Therefore, a simple structure can be adopted in the rectifier 17 with a half-wave rectifier circuit having a single diode or a full-wave rectifier circuit having a diode bridge.

Note that the present invention is not limited to the above embodiment, and a variety of modifications can be made without departing from the spirit and scope of the present invention. For example, in FIG. 1, a direct current load can be connected between the bidirectional inverter 13 and the grid interconnection switch 14, and the direct current load can be fed by the power generating equipment 21 or the grid 22. Furthermore, the DC/DC converter 12 can be provided with the function of the direct current input unit 11 in FIG. 1. Similarly, the bidirectional inverter 13 can be provided with the function of the alternating current input/output unit 15. The MPPT function of the DC/DC converter 12 may be controlled so as always to suspend operation thereof when the AC switch 16 is ON. Two grid interconnection switches 14 may also be provided in series.

### REFERENCE SIGNS LIST

- 10:: Power conditioner
- 11:: Direct current input unit
- 12:: DC/DC converter
- 13:: Bidirectional inverter
- 14:: Grid interconnection switch
- 15:: Alternating current input/output unit
- 16:: AC switch
- 17:: Rectifier
- 18:: Direct current output unit
- 19:: Control unit
- 21:: Power generating equipment
- 22:: Commercial power grid (grid)
- 23:: Direct current load

## Claims

1. A power conditioner comprising:
a DC/DC converter configured to receive input of direct current output by power generating equipment;
a direct current output unit configured to output, to an external unit, direct current output from the DC/DC converter;
a grid interconnection switch configured to connect to a commercial power grid;
an inverter configured to connect to the commercial power grid via the grid interconnection switch and to perform DC/AC conversion by converting the direct current output from the DC/DC converter to alternating current and outputting the alternating current to the commercial power grid;
an AC switch connected to a commercial power grid side of the grid interconnection switch;
a rectifier configured to connect to the commercial power grid via the AC switch, to rectify alternating current from the commercial power grid, and to output rectified current to the DC/DC converter; and
a control unit configured to connect the AC switch before disconnecting the grid interconnection switch when the grid interconnection switch is to be disconnected under a predetermined disconnection condition.

2. The power conditioner according to claim 1, wherein
when connecting the AC switch, the control unit aligns a voltage of the direct current output by the power generating equipment with a rectified voltage from the rectifier when the power generating equipment is generating power.

3. The power conditioner according to claim 2, wherein
the DC/DC converter has a function for maximum power point tracking of the direct current output by the power generating equipment, and
the control unit suspends operation of the function for maximum power point tracking and aligns the voltage of the direct current output by the power generating equipment with the rectified voltage from the rectifier.

4. The power conditioner according to claim 3, wherein
the power conditioner connects to equipment including a solar panel as the power generating equipment.

5. The power conditioner according to claim 1, wherein
the control unit disconnects the grid interconnection switch and connects the AC switch with the predetermined disconnection condition being one of grid voltage and grid frequency of the commercial power grid deviating from a predetermined range.

6. The power conditioner according to claim 5, wherein
the control unit disconnects the grid interconnection switch and connects the AC switch within a first time interval from detection of the predetermined disconnection condition.

7. The power conditioner according to claim 5, wherein
the first time interval is two seconds.

8. The power conditioner according to claim 1, wherein
upon disconnecting the grid interconnection switch and connecting the AC switch, the control unit executes grid interconnection restoration processing when a second time interval elapses after disconnecting the grid interconnection switch.

9. The power conditioner according to claim 8, wherein
the second time interval is 10 seconds.

10. The power conditioner according to claim 8, wherein
as the grid interconnection restoration processing, the control unit connects the grid interconnection switch and disconnects the AC switch when the predetermined disconnection condition is no longer met.

11. The power conditioner according to claim 10, wherein
when connecting the grid interconnection switch, the control unit connects the grid interconnection switch before disconnecting the AC switch.

12. The power conditioner according to claim 8, wherein
the DC/DC converter has a function for maximum power point tracking of the direct current output by the power generating equipment, and
when executing the grid interconnection restoration processing, the control unit starts operation of the function for maximum power point tracking.

13. The power conditioner according to claim 1, wherein
the inverter is a bidirectional inverter also configured to perform AC/DC conversion by converting the alternating current from the commercial power grid to direct current and outputting the direct current to the direct current output unit, and
the bidirectional inverter selectively performs the DC/AC conversion and the AC/DC conversion.

14. A method for controlling a power conditioner, the power conditioner comprising:
a DC/DC converter configured to receive input of direct current output by power generating equipment;
a direct current output unit configured to output, to an external unit, direct current output from the DC/DC converter;
a grid interconnection switch configured to connect to a commercial power grid; and
an inverter configured to connect to the commercial power grid via the grid interconnection switch and to perform DC/AC conversion by converting the direct current output from the DC/DC converter to alternating current and outputting the alternating current to the commercial power grid;
the method comprising:
an AC switch connected to a commercial power grid side of the grid interconnection switch;
a rectifier configured to connect to the commercial power grid via the AC switch, to rectify alternating current from the commercial power grid, and to output rectified current to the DC/DC converter; and
a control unit configured to connect the AC switch before disconnecting the grid interconnection switch when the grid interconnection switch is to be disconnected under a predetermined disconnection condition.

15. A power generation system comprising power generating equipment and a power conditioner,
the power conditioner comprising:
a DC/DC converter configured to receive input of direct current output by power generating equipment;
a direct current output unit configured to output, to an external unit, direct current output from the DC/DC converter;
a grid interconnection switch configured to connect to a commercial power grid;
an inverter configured to connect to the commercial power grid via the grid interconnection switch and to perform DC/AC conversion by converting the direct current output from the DC/DC converter to alternating current and outputting the alternating current to the commercial power grid;
an AC switch connected to a commercial power grid side of the grid interconnection switch;
a rectifier configured to connect to the commercial power grid via the AC switch, to rectify alternating current from the commercial power grid, and to output rectified current to the DC/DC converter; and
a control unit configured to connect the AC switch before disconnecting the grid interconnection switch when the grid interconnection switch is to be disconnected under a predetermined disconnection condition.
